# EUROPEAN PATENT SPECIFICATION

(11) **EP 2 388 725 B1**
(45) Date of publication and mention of the grant of the patent: **11.01.2017**
(21) Application number: 10163661.1
(22) Date of filing: 21.05.2010
(51) Int. Cl.: G06F 21/00

(54) **A METHOD FOR CONTROLLING THE EXECUTION OF AN APPLICATION ON A COMPUTER SYSTEM**
Verfahren zur Steuerung der Ausführung einer Anwendung auf einem Computersystem
Procédé de contrôle d'exécution d'une application sur un système informatique

(43) Date of publication of application: 23.11.2011
(73) Proprietor: SFNT Germany GmbH, 82110 Germering (DE)
(72) Inventor: Kumar, Pratyush, New Delhi 110017 (IN); Mahr, Sebastian, D-82110 Germering (DE); Zunke, Michael, D-82229 Seefeld (DE); Suri, Sandeep, Jammu and Kashmir 180012 (IN); Kaushik, Navin, Gurgaon 122003 Haryana (IN); Sinha, Ranjan, Utar Pradesh 201301 (IN); Gupta, Manish, New Delhi 110088 (IN); Fox, Jake, Los Angeles CA 90041 (US); Weiss, Shlomo, Modiin 71700 (IL); Ramon, Haim Hemi, Moshav Nir 79505 (IL)
(74) Representative: Scheer, Luc

(56) References cited:
- WO-A1-2008/116087
- US-A- 5 260 999
- US-A1- 2002 164 025
- US-A1- 2005 149 340
- US-A1- 2005 278 716
- US-B1- 6 499 035

## Description

The present invention relates to a method for controlling the execution of an application on a computer system.

Despite the fact that most computer users today are aware that unauthorized use of a software application is illegal, many show a general disregard for the importance of treating a software application as valuable intellectual property. On solution for stopping such illegal use of a software application is to amend the software application before distribution such that the software application can only be executed when a license is present which has to be purchased.

If the software application is offered as a service via a distributed computer system (like the internet) by a software vendor, the software vendor will carry out a provisioning step after a user subscribed to the service. The provisioning step ensures that the subscribed services are available to the user, this step is equivalent to giving a user a license in the classical software case. For simplicity the terms are used interchangeably in this application.

However, the implementation of this kind of protection (license verification before execution) depends on the intended use of the application. In particular, the implementation is different for the case, that the customer installs the application on his personal computer or that the customer uses the software as a service provided via a distributed computer system.

In view thereof it is object of the invention to provide a method for controlling the execution of a software application on a computer system allowing a simplified implementation of a license verification in the software application.

The object is solved by a method for controlling the execution of a software application on a computer system according to claim 1.

By providing this method it is possible to abstract the special kind of license from the specific implementation in the software application since the license client solely decides based on the license map including the information whether a license is present or not. Therefore, the license verification is carried out independent from the concrete kind of license (independent from the concrete license terms).

Since the kind of license is not checked by the license client it is possible to offer different kind of licenses (license terms) for the software application without the need of an amendment of the software application itself. Therefore, a software vendor offering a license for the software application can change and experiment with new kinds of licenses or with new business models without the need to go back to the developer of the software application in order to implement an amended kind of license.

The license of the software application can be a license for at least one feature or one part of the application (but not for the complete application) or can be a license for the complete application. In particular, different license terms for different features of the application are possible. Due to the inventive method it is only necessary to implement in the application which features or functionalities (functions/services) of the application can be separately licensed. After defining this kind of granularity of different features which can be separately licensed the license terms for these features can be defined and amended without the need to carry out any further amendments of the application itself. Therefore, the possible business models for the application are abstracted from the implementation in the application.

The software application can be licensed as an on-premise software application or as a service software application provided via a distributed computer system.

In particular, the computer system can be a distributed computer system having at least two separate service nodes (which can be connected with each other via the internet, for example), wherein the license client is provided on each service node and the license server delivers said license map to each license client and, when a user is requesting execution of said application, the license client of the service node, to which the request is directed, decides whether the user is allowed to execute said application based on the present license map.

Due to the local decision of the respective license client it is not required to ensure globally consistent license data for the distributed computer system. Therefore, the inventive method can have the same scalability as the distributed computer system.

The step of delivering the license map to the license client(s) is preferably carried out before receiving the execution request from the user for the first time.

Further, the license servers can deliver the license map with a validity period indicating the time period during which the license map is valid for the license client. In this kind it is possible to consider amendments in the license.

In particular, the license client can request for a new license map before expiry of the validity period. The new license map preferably replaces the actual license map. In this kind it is possible to ensure that the license client can always decide based on a actual license map.

The license client can request for the license map or for a new license map when receiving said execution request of the user. This kind of delivering the license map reduces the communication load in the distributed computer system.

The license client can use the license map after expiry of the validity period if it is not possible to get a new license map from the license server within a predetermined time. So it is possible to ensure a fast and quick response even if a communication with the license server is interrupted from time to time.

The license client(s) can log and transmit use data relating the execution of the application to the license server, wherein the license server can generate a new license map taking into account the use data and can deliver said new license map. In this way it is possible to adapt the license map to the actual use situation.

In particular, the license server can change the time period for providing said new license map dependent on said use data. For example, if a licensed usage amount is nearly exceeded it is possible to reduce the time period for delivering a new license map so that the new license map can be delivered immediately after exceeding the licensed usage amount.

There is provided a computer program product which comprises software code in order to carry out the steps of the inventive method or of one of the further embodiments of the inventive method when the product is being executed on a computer, in particular on (at least a part of) the computer system.

There is further provided a control system for controlling the execution of the software application on a computer system according to claim 10.

The computer system can be a distributed computer system having at least two separate service nodes. In this case the control system comprises one license client on each service node, wherein the license server delivers the license map to each license client and, when a user is requesting execution of the application, the license client of a service node, to which the request is directed, decides, whether the user is allowed to execute the application (at this point of time) based on the present license map.

Each of the license server and of the license client(s) can be embodied as software and/or hardware.

The inventive control system can be further developed such that the further embodiments of the inventive method for controlling the execution of a software application on a computer system can be carried out.

It will be appreciated that the features mentioned above and those yet to be explained below can be used not only in the indicated combinations, but also in other combinations or alone, without departing from the scope of the present invention.

The invention will be explained below in closer detail by reference to the enclosed drawings which also disclose features relevant to the invention, wherein:
- Fig. 1: shows schematically a distributed computer system;
- Fig. 2: shows a license map, and
- Fig. 3: shows an amended license map.

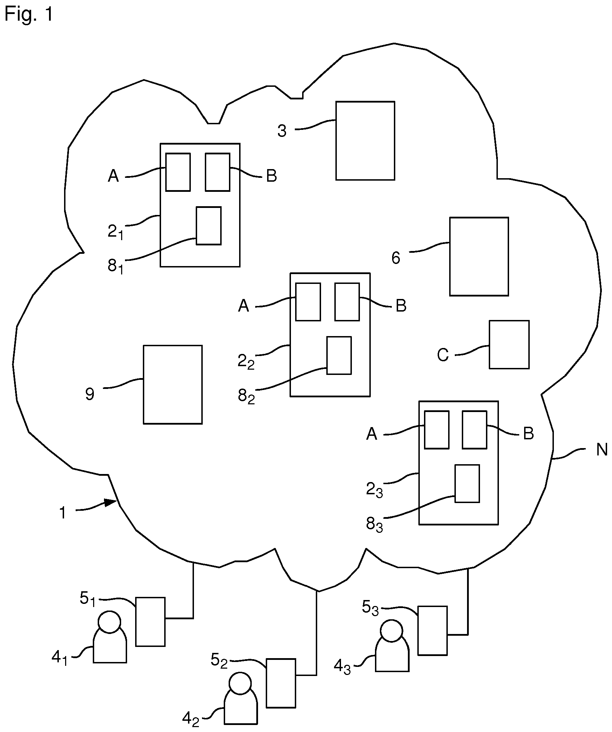

Figure 1 schematically shows a distributed computer system 1 comprising service nodes 2₁, 2₂, 2₃, a service node server 3, and an authentication server 9.

As indicated by a cloud N the service nodes 2₁, 2₂, 2₃ itself, the service node server 3 and the authentication server 9 are connected with each other through a network N, for example the internet. Therefore, the service nodes 2 can be spread over the whole globe.

The distributed computer system 1 can be used to provide applications A, B to users 4₁, 4₂, 4₃ for use as a service on demand. Such a model of software deployment is often called software as a service (SaaS). In this case, the users 4₁, 4₂, 4₃ can use the licensed application through the network N and need not to install the application on the respective local computer 5₁, 5₂, 5₃. For example, the licensed application A can be used by a first user 4₁ via a web browser on the local computer 5₁.

In order to effectively manage the license for the applications A, B in such a distributed computer system 1 the following method is provided.

It is assumed that a first user 4₁ purchases a license for the desired application A to be executed on the service nodes 2 from a license server 6 (which can also be called entitlement server 6). The license can be a pay-per-use license, a subscription license or any other kind of license. A second user 4₂ purchases a license for a second application B.

In the field of distributed computer systems a purchase of a license is often called signing a contract. The steps to be carried so that the user 4 can use the licensed application via the distributed computer system are often called user provisioning. This corresponds to a delivery of a license for an on-premise application eventually enabling the user to use the software or service.

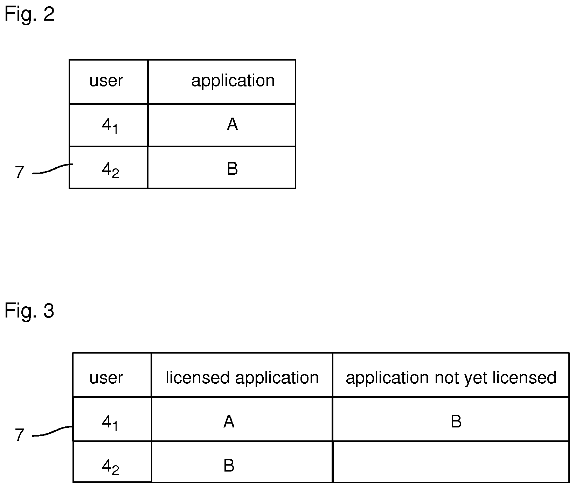

The license server 6 generates a simplified license map 7 based on the licenses purchased. The license map 7 only includes the information which application is licensed by which user. As schematically shown in figure 2 the first user 4₁ is allowed to use application A and the second user 4₂ is allowed to use application B. However, the license map 7 does not include information about the kind of the purchased licenses.

There is further provided a license client 8₁, 8₂, 8₃ on each service node 2₁, 2₂, 2₃. The license server 6 delivers the generated license map 7 to each license client 8₁, 8₂, 8₃.

When the first user 4₁ requests to execute application A the steps carried out can be as follows.

The request is routed to the authentication server 9. The authentication server 9 authenticates or identifies the user 2, assigns a unique user identification to the request and routes the request together with the user identification to the application A on one of the service nodes 2 (in this example the first service node 2₁). Therefore, the authentication server 9 is used to assign an identity to a request, wherein the assigned identity is licensed for the system of service nodes 2.

The application A directs the request to the license client 8₁ on the first service node 2₁. The license client 8₁ checks whether the first user 4₁ is allowed to execute application A based on the local license map 7. If the first user 4₁ is not allowed to execute application A, this is transmitted to the application A. As a result, application A is not executed and this information is given to the first user 4₁.

If, however, the first user 4₁ is allowed to execute application A, this is given to the application A together with a unique session identification. Therefore, the license request gets locally fulfilled on the respective (first) service node 2₁. Thus, the service nodes 2 can act autonomously and answer license queries locally. This enables an extremely rapid response and perfect scaling exactly like for the SaaS application A itself.

Further, the license client 8₁ logs this request. In particular, the corresponding log entry can comprise the following information: who (= first user 4₁), when (time t1 of request), what (= application A or the licensed feature(s) of application A), unique session identification, service provider identifier.

When the first user 4₁ terminates the use of the application A, the application A informs the corresponding license client 8 about the termination. The license client 8 makes a log entry indicating the time of termination of the application A together with the session identification.

Due to the nature of the distributed computer system 1 it is possible that at the time t2 of termination of the application A the application A was executed on a second service node 2₂. In this case, the two log entries are stored by two different license clients 8₁, and 8₂. The log entry for starting the execution of the application A is stored by the first license client 8₁ and the log entry (including the unique session identification and the termination time t2) for the termination of the application is stored by the second license client 8₂. However, the license clients 8₁, 8₂, 8₃ report the log entries to the license server 6. Based on the log entries the license server 6 can create a session indicating that the first user 4₁ used the application A from time t1 to time t2. Based on this session the creation of the corresponding invoice is possible. If, for example, the license was a pay-per-use license, it is possible to debit the exact amount for the invoice depending on the time period from t1 to t2 and/or the number of times the application A has been used.

It is possible to assign a validity period for the license map. That means, that for each license client 8₁, 8₂, 8₃ the license map 7 is definitely valid during the assigned validity period.

The validity period can be set such that it is the shortest license change time of all applications listed in the license map. The license change time of an application or of a feature of an application is the minimum time period during which no condition of the license changes starting from the creation of the license map to be delivered to the license clients 8. In case the license map is pre-produced for starting to be used at a point of time in the future T(f), the license change time is the time between T(f) and the first change time of any of the referenced licenses. In addition, one can take into consideration a deprovisioning time which is the time until deprovisioning of the license gets propagated to each service node 2₁, 2₂, 2₃ which depends on the distributed computer system 1. Preferably, the shortest time of the deprovisioning time and the license times is used for the validity period.

In order to refresh or renew the license maps 7 in the service nodes 2₁, 2₂, 2₃ different mechanisms can be used.

For example, only when a license request is directed to a license client 8₁, 8₂, 8₃ the respective license client 8₁, 8₂, 8₃ verifies whether the license map 7 is still valid. If the validity period is expired the respective license client 8₁, 8₂, 8₃ requests a further license map 7 from the license server 6. After receiving the license map 7 from the license server 6 the license request can be handled by the respective license client 8₁, 8₂, 8₃.

However, it can occur that the connection to the license server 6 is temporarily down which is part of daily business in the internet N. In this case the respective license client 8₁, 8₂, 8₃ can answer the license request according to the present license map 7 (although the validity period has already expired) in order to satisfy the users request for executing the application A with a very short response time. Therefore, the license map 7 remains valid even after expiry of the validity period.

Since this license request is logged as mentioned above, it is still possible to charge for this service.

As soon as a connection with the license server 6 is possible, the respective license client 8₁, 8₂, 8₃ procures a new license map 7 and replaces the old license map 7.

Further, it is possible, that the license client 8₁, 8₂, 8₃ requests for a new license map 7 before the expiry of the validity period so that a valid license map 7 is always present.

In a further embodiment the license client 8₁, 8₂, 8₃ only procures a new license map 7 for a recently used application A.

The license map 7 can be described as snapshot of the license, wherein the license map 7 can be amended as time goes by although the license itself remains unchanged.

The license map 7 may comprise an unique generation counter. In this case, the license client 8₁, 8₂, 8₃ can ask the license server 6 in a first step whether the generation counter is still valid. If the generation counter is still valid the license client 8₁, 8₂, 8₃ can set a new validity period. The generation counter remains valid as long as no amended license map has to be created or has been created by the license server. The duration of the new validity period preferably corresponds to the duration of the old validity period. If the generation counter has changed the license client 8₁, 8₂, 8₃ requests for a new license map 7.

With the described method various license models can be realized. For example, in a pay-per-use model it is desirable to be able to cap the maximum usage on request of the provider 3 or on request of the user 4. For accommodating the global synchronization complexity the license clients 8 and the license server 6 can be embodied as follows. Each license client 8 collects use data and periodically transfers these use data to the license server 6. The license server 6 aggregates the use data and triggers modifications to the license map 7 to be delivered to the license clients 8 based on the purchased license. Therefore, there can be guaranteed a switch-off time starting from the exceeding of the cap until switch-off of the license for the application. The switch-off time depends on the steps of collecting and transmitting of the use data to the license server 9, aggregating use data as well as on the steps of amending the license map 7 and transmitting the amended license map 7.

In order to reduce the guaranteed switch-off time the reporting frequency and/or the aggregation frequency can be enhanced. Further, the validity time can be reduced. However, this leads to an increase of data communication. Therefore, a compromise will be found between the guaranteed switch-off time and expenditure for reducing the guaranteed switch-off time.

It is further possible to consider the use rate, the remaining use time and/or the trust level of the user 4 in order to reduce the guaranteed switch-off time. The trust level specifies the reliability of the user 4 to pay for the actual usage. The higher the trust level, the better the reliability of the user.

The user 4₁, 4₂, 4₃ can be a single person or can be a group of persons. In the latter case, the maximum usage license can be a license limiting the amount of applications A executed at the same time. If the license server 6 determines that the maximum amount of executed applications A is exceeded, an amended license map 7 is generated in which the license of user 4₁ for application A is no longer included. This amended license map 7 is distributed to all license clients 8. Therefore, no further person of the user 4₁ can execute a further instance of application A.

If the license server 6 determines that the amount of persons of user 4₁ using application A falls below the maximum usage a new license map 7 is generated in which the user 4₁ is allowed to use application A. In this way it is possible to license a maximum usage of the application A in term of persons using the application A at the same time even if the application A is executed on a distributed computer system 1.

At least one of the users 4₁, 4₂, 4₃ can be another application C, in particular a software or web application. A web application can be a service provided in the network N which can be hosted by one or a plurality of service nodes in the network N. In this case the software application C is identified (for example by the authentication server 9) and the unique user identification is assigned to the application C. Therefore, the software application C can use the application A, for example, according to one of the above described embodiments. The service nodes 2 can provide a WebService API or a RESTfull interface in order to enable the use of a software application A, B by another software application C.

In the above description application A and/or B are licensed. However, it is of course possible to license only at least one specific feature of the application A, B. In particular, it is possible to license at least two features of application A, B wherein the kind of license or the license terms for the at least two features are different. The license for the first feature of application A can be a subscription license and the license for the second feature of the application can be a pay-per-user license.

The license server 6 can take into consideration further information when generating the license map 7 to be delivered to the license server 2. For example, all licenses or all features being part of the contract of a respective user 4 can be considered when creating the license map 7. In addition or as an alternative data about prior use of the user or of other users which purchased the same or a similar license for the respective application can be considered. Therefore, it is possible to preload the clients with the license map 7 before a corresponding request of the user is directed to one of the license clients.

According to a further embodiment the license clients 8 do not only log the above-mentioned information about the actual use of the application but further application specific data as for example which feature or part of the application was used how long, etc. This further application specific data can be aggregated by the license server 6 and used for generation of the license maps 7. In addition, further data mining can be done using these data.

The above embodiments are directed to the provision of an application for use as a service on demand through a network N. However, it is also possible to use the above described method for controlling the execution of an on-premise software application. In this case, the licensed application can be installed by the user 4 on his own computer or computer network. The license client is preferably also installed on the computer or computer network and the license server can be part of the computer or computer network of the user or of an external network, as for example the internet. Further, the license server can communicate with a further server of the software vendor so that a pay-per-use license for the on-premise software can be provided, for example, since the necessary information for creating the invoice can be transmitted by the license server.

In figure 3 there is shown an amended license map 7 in which a further information is included. In this license map the further information is included that the first user 4₁ is not allowed to use application B. This information can be used to inform the user 4₁ about the fact, that he can purchase a license for application B if he wants to use application B. This information can be displayed on the computer 5₁ of the first user 4₁ when the authentication server 9 identifies the user 4₁, for example.

## Claims

1. A method for controlling an execution of a software application as a service on demand on a distributed computer system having at least two separate service nodes, said method comprising the following steps:
generating a license map based on a given license for said application, said license map including the information which user is allowed to execute said application,
providing a license client on each service node,
providing a license server delivering said license map to each license client,
wherein, when a user is requesting the execution of said application on the service node, the license client of the service node, to which the request is directed, decides, whether the user is allowed to execute said application based on the present license map.

2. Method according to claim 1, wherein the license client requests for said license map when receiving said execution request of the user.

3. Method according to one of the above claims, wherein the license server delivers the license map with a validity period indicating the time period during which the license map is valid for the license client.

4. Method according to claim 3, wherein the license client requests for a new license map before an expiry of the validity period.

5. Method according to claim 3 or 4, wherein the license client uses the license map after an expiry of the validity period if it is not possible to get a new license map from the license server within a predetermined time.

6. Method according to one of the above claims, wherein the license client(s) log(s) and transmit(s) use data relating to the execution of said application to said license server, and wherein the license server generates a new license map taking into account said use data and delivers said new license map.

7. Method according to claim 6, wherein the license server changes the time period for providing said new license map dependent on said use data.

8. Method according to one of the above claims, wherein the license server delivers an amended license map to the license clients replacing the actual license map on the license clients even if the given license remains unchanged.

9. Computer program product, which comprises a software code in order to carry out the steps of one of the above method claims, when the product is being executed.

10. A control system for controlling an execution of a software application as a service on demand on a distributed computer system having at least two separate service nodes, said control system comprising a license client (2) and a license server (6) generating a license map based on a given license for said application, said license map including the information which user is allowed to execute said application, and delivering said license map to each license client,
wherein, when a user is requesting the execution of said application on the service node, the license client of the service node, to which the request is directed, decides, whether the user is allowed to execute said application based on the present license map.

## Patentansprüche

1. Verfahren zur Steuerung einer Ausführung einer Softwareanwendung als Dienst auf Abruf auf einem verteilten Computersystem mit wenigstens zwei verschiedenen Dienstknoten, wobei das Verfahren die folgenden Schritte umfasst:
- Erzeugen einer Lizenzkarte anhand einer gegebenen Lizenz für die Anwendung, wobei die Lizenzkarte die Informationen enthält, welchem Benutzer es gestattet ist, die Anwendung auszuführen,
- Bereitstellen eines Lizenz-Clients an jedem Dienstknoten,
- Bereitstellen eines Lizenz-Servers, der die Lizenzkarte an jeden Lizenz-Client liefert,
wobei dann, wenn ein Benutzer um die Ausführung der Anwendung an dem Dienstknoten ersucht, der Lizenz-Client des Dienstknotens, an den das Ersuchen gerichtet wird, anhand der vorliegenden Lizenzkarte entscheidet, ob es dem Benutzer gestattet ist, die Anwendung auszuführen.

2. Verfahren nach Anspruch 1, wobei der Lizenz-Client bei Erhalt des Ausführungsersuchens des Benutzers die Lizenzkarte anfordert.

3. Verfahren nach einem der vorstehenden Ansprüche, wobei der Lizenz-Server die Lizenzkarte mit einem Gültigkeitszeitraum mit Angabe der Zeitdauer liefert, während der die Lizenzkarte für den Lizenz-Client gültig ist.

4. Verfahren nach Anspruch 3, wobei der Lizenz-Client vor einem Ablauf des Gültigkeitszeitraums eine neue Lizenzkarte anfordert.

5. Verfahren nach Anspruch 3 oder 4, wobei der Lizenz-Client die Lizenzkarte nach einem Ablauf des Gültigkeitszeitraums verwendet, wenn es nicht möglich ist, innerhalb einer vorbestimmten Zeit eine neue Lizenzkarte vom Lizenz-Server zu erhalten.

6. Verfahren nach einem der vorstehenden Ansprüche, wobei der bzw. die Lizenz-Client(s) Nutzungsdaten, die die Ausführung der Anwendung betreffen, aufzeichnet bzw. aufzeichnen und an den Lizenz-Server überträgt bzw. übertragen, und wobei der Lizenz-Server unter Berücksichtigung der Nutzungsdaten eine neue Lizenzkarte erzeugt und die neue Lizenzkarte liefert.

7. Verfahren nach Anspruch 6, wobei der Lizenz-Server die Zeitdauer zur Bereitstellung der neuen Lizenzkarte abhängig von den Nutzungsdaten ändert.

8. Verfahren nach einem der vorstehenden Ansprüche, wobei der Lizenz-Server eine abgeänderte Lizenzkarte an die Lizenz-Clients liefert, die die eigentliche Lizenzkarte auf den Lizenz-Clients ersetzt, auch wenn die gegebene Lizenz unverändert bleibt.

9. Computerprogrammprodukt, das einen Softwarecode umfasst, um die Schritte nach einem der vorstehenden Verfahrensansprüche durchzuführen, wenn das Produkt ausgeführt wird.

10. Steuersystem zur Steuerung einer Ausführung einer Softwareanwendung als Dienst auf Abruf auf einem verteilten Computersystem mit wenigstens zwei verschiedenen Dienstknoten, wobei das Steuersystem einen Lizenz-Client (2) und einen Lizenz-Server (6) umfasst, der eine Lizenzkarte anhand einer gegebenen Lizenz für die Anwendung erzeugt, wobei die Lizenzkarte die Informationen enthält, welchem Benutzer es gestattet ist, die Anwendung auszuführen, und die Lizenzkarte an jeden Lizenz-Client liefert,
wobei dann, wenn ein Benutzer um die Ausführung der Anwendung an dem Dienstknoten ersucht, der Lizenz-Client des Dienstknotens, an den das Ersuchen gerichtet wird, anhand der vorliegenden Lizenzkarte entscheidet, ob es dem Benutzer gestattet ist, die Anwendung auszuführen.

## Revendications

1. Procédé pour contrôler une exécution d'une application logicielle en tant que service à la demande sur un système informatique distribué comportant au moins deux noeuds de service distincts, ledit procédé comprenant les étapes suivantes :
- une génération d'une carte de licence en se basant sur une licence donnée pour ladite application, ladite carte de licence comprenant les informations indiquant quel utilisateur est autorisé à exécuter ladite application,
- une provision d'un client de licence à chaque noeud de service,
- une provision d'un serveur de licence délivrant ladite carte de licence à chaque client de licence,
dans lequel, lorsqu'un utilisateur demande l'exécution de ladite application sur le noeud de service, le client de licence du noeud de service, vers lequel la demande est dirigée, décide si l'utilisateur est autorisé à exécuter ladite application sur la base de la présente carte de licence.

2. Procédé selon la revendication 1, dans lequel le client de licence demande ladite carte de licence lorsqu'il reçoit ladite demande d'exécution de l'utilisateur.

3. Procédé selon l'une des revendications précédentes, dans lequel le serveur de licence délivre la carte de licence avec une période de validité indiquant la période de temps pendant laquelle la carte de licence est valide pour le client de licence.

4. Procédé selon la revendication 3, dans lequel le client de licence demande une nouvelle carte de licence avant une expiration de la période de validité.

5. Procédé selon la revendication 3 ou 4, dans lequel le client de licence utilise la carte de licence après une expiration de la période de validité s'il n'est pas possible d'obtenir une nouvelle carte de licence auprès du serveur de licence dans les limites d'un temps prédéterminé.

6. Procédé selon l'une des revendications précédentes, dans lequel le ou les clients de licence s'enregistrent et transmettent des données d'utilisation relatives à l'exécution de ladite application audit serveur de licence, et dans lequel le serveur de licence génère une nouvelle carte de licence en prenant en compte lesdites données d'utilisation et délivre ladite nouvelle carte de licence.

7. Procédé selon la revendication 6, dans lequel le serveur de licence modifie la période de temps pour fournir ladite nouvelle carte de licence en fonction desdites données d'utilisation.

8. Procédé selon l'une des revendications précédentes, dans lequel le serveur de licence délivre aux clients de licence une carte de licence amendée remplaçant la réelle carte de licence sur les clients de licence même si la licence donnée reste inchangée.

9. Produit-programme d'ordinateur, qui comprend un code logiciel afin d'exécuter les étapes de l'une des revendications de procédé précédentes, lorsque le produit est exécuté.

10. Système de commande pour contrôler une exécution d'une application logicielle en tant que service à la demande sur un système informatique réparti comportant au moins deux noeuds de service séparés, ledit système de commande comprenant un client de licence (2) et un serveur de licence (6) générant une carte de licence sur la base d'une licence donnée pour ladite application, ladite carte de licence comprenant les informations indiquant quel utilisateur est autorisé à exécuter ladite application, et délivrant ladite carte de licence à chaque client de licence,
dans lequel, lorsqu'un utilisateur demande l'exécution de ladite application sur le noeud de service, le client de licence du noeud de service, vers lequel la demande est dirigée, décide si l'utilisateur est autorisé à exécuter ladite application sur la base de la présente carte de licence.
